# EUROPÄISCHE PATENTSCHRIFT

(11) **EP 0 517 155 B1**
(45) Veröffentlichungstag und Bekanntmachung des Hinweises auf die Patenterteilung: **18.10.1995**
(21) Anmeldenummer: 92109274.8
(22) Anmeldetag: 02.06.1992
(51) Int. Cl.: B29C 33/62, B29K 21/00

(54) **Wässriges Aussentrennmittel und Verfahren zur Formung und Vulkanisation von Reifen und anderen Gummiartikeln**
Waterborne external release agent, and molding process for vulcanization of tyres or other rubber articles
Agent de démoulage sur la base aqueuse, et procédé de moulage pour la vulcanisation de pneumatiques ou autres objets en caoutchouc

(30) Priorität: 04.06.1991 DE 4118234
(43) Veröffentlichungstag der Anmeldung: 09.12.1992
(73) Patentinhaber: Rhein Chemie Rheinau GmbH, 68219 Mannheim (DE)
(72) Erfinder: Wagner, Herbert, W-7525 Bad Schönborn (DE); Schuhmacher, Karl-Heinrich, W-6837 St. Leon-Rot (DE)
(74) Vertreter: Gremm, Joachim, Dr.

(56) Entgegenhaltungen:
- EP-A- 0 341 186
- DE-A- 2 904 240
- JAPANESE PATENTS ABSTRACTS (UNEXAMINED) Section Ch, Week 9126, 14. August 1991 Derwent Publications Ltd, London, GB; Class G, Page 26, AN 91-188988/26 & JP-A-3 115 484
- GEORGE S. BRADY 'MATERIALS HANDBOOK' 1963 , MC GRAW HILL , NEW YORK NY. USA

## Beschreibung

Die Erfindung betrifft ein wäßriges Außentrennmittel für die Herstellung von Reifen und anderen Gummiartikeln sowie ein Verfahren zur Formung und Vulkanisation von Reifen und anderen Gummiartikeln unter Verwendung dieses wäßrigen Außentrennmittels.

Formtrennmittel werden bei der Verarbeitung von Kunststoffen, Kautschuken, Glas und Metall häufig verwendet. Sie dienen im wesentlichen dazu, das Anbacken des Materials an einer Form zu verhindern. Beispielsweise hat man vernetzte Carboxyl-Gruppen enthaltende Copolymerisate in Form wäßriger Lösungen für diesen Zweck benutzt (OS 29 04 240) und in einer speziellen Anwendung - zum Verhindern des Anbackens von Dichtungen - Mischungen aus Füllstoffen, einem Bindemittel, einem Desinfektionsmittel und Wasser (JP-A-3115 484).

Nach dem Stand der Technik werden Reifen geformt und vulkanisiert, indem die Reifenrohlinge in eine Sprühkabine eingebracht werden, in der sie mittels mechanischer Vorrichtungen in Rotation versetzt werden. In diese Rohlinge wird eine Sprühpistole eingefahren, mit der eine Trennmittellösung auf der Innenseite der Rohlinge verteilt wird. Bei vielen bestehenden Reifenproduktionsanlagen ist es außerdem erforderlich, ein Trennmittel zwischen der Außenseite des Reifenrohlings und der Metallform der Vulkanisationspresse, ein sogenanntes Außentrennmittel, zu verwenden. Die Aufbringung von Trennmittel auf der Innen- und der Außenseite des Reifenrohlings ist in der Regel ein Arbeitsgang.

Der Overspray wird mittels Vakuum oder einer Wasserwand entfernt. Anschließend erfolgt die Formung und Vulkanisation des Rohlings in einer Vulkanisationspresse mittels einer Heizmembran (Blase, Bladder), die die Aufgabe hat, den Reifenrohling zu beheizen, die Vulkanisation zu bewerkstelligen und den Reifen mit hohem Druck in Negativformen zu drücken (vgl. die Beschreibung dieser Arbeitsweise in der DE-PS 29 25 662, der DE-OS 31 46 053, und insbesondere der Beschreibungseinleitung der veröffentlichten europäischen Patentanmeldung 0 111 100).

Die bei dieser Verfahrensweise als Trennmittel verwendeten Innen- und Außensprühlösungen bestehen meistens aus benzinösen Lösungen von trennwirksamen Substanzen, die mineralische Füllstoffe enthalten und einen Benzinanteil bzw. einen Gesamtanteil an organischen Lösungsmitteln in der Größenordnung von 70 Gew.% und mehr aufweisen. Übliche Außensprühlösungen, die mit luftzerstäubenden Pistolen, nach dem Airmix-Verfahren oder dem Airless-Verfahren aufgebracht werden können, haben z.B. folgende Zusammensetzung:

| | |
|---|---|
| Benzin (Siedebereich 100°-120° C.) | 70-90 Gew.% (vorzugsweise 80-85 Gew.%) |
| Alkohol (Ethylalkohol) | 4-5 Gew.% (oder weniger) |
| Talkum oder andere Füllstoffe | 4-7 Gew.% |
| Ruß | 6-10 Gew.% |
| Naturkautschuk | 2-7 Gew.% |
| Stearinsäure | 1-2 Gew.%. |

Diese Außensprühlösungen werden in einer Menge von 30-80 g und insbesondere etwa 60 g pro normalem Pkw-Reifen aufgebracht.

Es liegt auf der Hand, daß diese Trennmittellösungen umweltschädlich sind bzw. einen sehr großen apparativen Aufwand erfordern, um Umweltbelastungen zu vermeiden. Deshalb sind auch bereits wäßrige Trennmittellösungen vorgeschlagen worden, die sich aber bisher nur als Innentrennmittel bewährt haben. Die Folge davon ist, daß in vielen Reifenproduktionsanlagen wäßrige Innensprühlösungen und benzinöse Außensprühlösungen verwendet werden. Da der Overspray und die nicht auf dem Rohling verbleibenden Sprühlösungsmengen jedoch gemeinsam abfließen bzw. entfernt werden, ergibt sich als Abfallprodukt eine Mischung aus waßriger und benzinöser Sprühlösung, die Sondermüll darstellt. Entsprechendes gilt, wenn mit einem permanenten Trennmittelfilm beschichtete Heizmembranen verwendet werden, die den Einsatz von Innensprühlösungen überflüssig machen. Es besteht deshalb ein dringendes Bedürfnis nach einem wirksamen wäßrigen Außentrennmittel, damit die mit den bereits bewährten wäßrigen Innentrennmitteln oder mit einem permanenten Trennmittelfilm beschichteten Heizmembranen erzielbaren Vorteile tatsächlich zum Tragen kommen und die Behandlung der Reifenrohlinge mit Trennmittel insgesamt umweltfreundlicher gestaltet werden kann.

Der Erfindung lag deshalb die Aufgabe zugrunde, ein umweltfreundliches wäßriges Außentrennmittel für die Herstellung von Reifen und anderen Gummiartikeln sowie ein Verfahren zur Formung und Vulkanisation von Reifen und anderen Gummiartikeln vorzuschlagen, die die oben genannten Nachteile des Standes der Technik vermeiden, wobei die existierenden Produktionsanlagen ohne größere Änderungen weiterverwendet werden können.

Zur Lösung dieser Aufgabe wird ein wäßriges Außentrennmittel für die Herstellung von Reifen und anderen Gummiartikeln vorgeschlagen, das dadurch gekennzeichnet ist, daß es
A) 5 bis 35 Gew.% und vorzugsweise 7,5 bis 15 Gew.% Diatomeenerde,
B) 0,5 bis 6 Gew.% und vorzugsweise 1 bis 3 Gew.% pyrogene hydrophobe Kieselsäure,
C) 0,1 bis 2 Gew.% und vorzugsweise 0,2 bis 0,7 Gew.% nichtionisches Tensid,
D) 0,2 bis 3 Gew.% und vorzugsweise 0,4 bis 2 Gew.% eines Bindemittels ausgewählt aus
   a) Polymeren und deren Salzen, die Carboxylreste und vorzugsweise außerdem Arylreste enthalten, wobei mindestens so viele Carboxylreste vorhanden sein müssen, daß die Polymere wasserlösliche Salze bilden können,
   b) in Wasser dispergierten Estern der Polymere gemäß a),
   c) in Wasser gelöstem Casein und/oder Albumin,
   d) Cellulose und
   e) Mischungen von zwei oder mehreren Bindemitteln gemäß a) - d),
E) 0,1 bis 3 Gew.% und vorzugsweise 0,3 bis 1 Gew.% Farbstoff,
F) 0 bis 5 Gew.% und vorzugsweise 3 bis 5 Gew.% Ethylalkohol, und
G) im übrigen und vorzugsweise 45 bis 90 Gew.% Wasser enthält.

Gegenstand der Erfindung ist ferner ein Verfahren zur Formung und Vulkanisation von Reifen und anderen Gummiartikeln, bei dem in einer Presse mit Hilfe einer Heizmembran unter hohem Druck Negativformen in den Rohling gedrückt werden und die Vulkanisation bewerkstelligt wird, das dadurch gekennzeichnet ist, daß der Rohling vor Durchführung der Formung und Vulkanisation auf der Außenseite mit dem erfindungsgemäßen Außentrennmittel besprüht wird und das darin enthaltene Wasser unter Ausbildung eines Trennmittelfilms verdunsten gelassen wird.

Bevorzugte Ausführungsformen des erfindungsgemäßen Außentrennmittels und des erfindungsgemäßen Verfahrens ergeben sich aus den Unteransprüchen sowie der folgenden Beschreibung, in der die Erfindung anhand der Reifenherstellung erläutert wird, die Angaben aber auch für die Herstellung anderer Gummiartikel gelten bzw. hierauf übertragbar sind.

Die an ein Außentrennmittel für die Herstellung von Reifen und anderen Gummiartikeln zu stellenden Anforderungen sind vielfältig. Zu nennen sind insbesondere gute Entlüftungswirkung, leichte Entformung aus der Presse, geringe Verschmutzung der Presse, um häufige Reinigungen zu vermeiden, kein negativer Einfluß auf die Vulkanisation, d.h. insbesondere Silikonfreiheit, niedriger auf dem Reifen verbleibender Feststoffgehalt, gute Versprühbarkeit und kurze Trocknungszeit nach dem Aufsprühen auf den Reifenrohling und keine negativen Auswirkungen auf das Äußere (finish) des fertigen Reifens. Darüber hinaus soll das Außentrennmittel möglichst lagerstabil sein und im Falle, daß sich Feststoffe absetzen, durch einfaches Rühren wieder gebrauchsfertig gemacht werden können. Überraschenderweise hat sich gezeigt, daß all diese Anforderungen mit dem erfindungsgemäßen Außentrennmittel in ausgezeichneter Weise erreicht werden können. Dabei ist es besonders überraschend, daß bei Außentrennmitteln mit hohem Wassergehalt eine Hautbildung nach der Aufbringung auf der Außenseite des Reifenrohlings weitgehend unterbleibt, so daß aufgrund der vorhandenen großen Oberfläche eine schnelle Verdunstung des Wassers und damit eine rasche Ausbildung des gewünschten Trennmittelfilms erfolgt.

Die erfindungsgemäß verwendete Diatomeenerde besitzt von Natur aus eine hohe Porosität und wird in Form eines feinteiligen Pulvers eingesetzt, wobei es bevorzugt ist, daß die Teilchen überwiegend eine Größe (Coulter Counter) von 2 bis 40 µm aufweisen. Ein geeignetes im Handel erhältliches Produkt besitzt beispielsweise eine Teilchengrößeverteilung, bei der 4% bis 6% der Teilchen eine Größe von 20 bis 40 µm, 20% bis 30% der Teilchen eine Größe von 10 bis 20 µm, 32% bis 40% der Teilchen eine Größe von 6 bis 10 µm und 35% bis 52% der Teilchen eine Größe von 2 bis 6 µm besitzen. Größere und kleinere Teilchen sind in diesem Produkt nur in Spuren vorhanden.

Der Gehalt des erfindungsgemäßen wäßrigen Außentrennmittels an Diatomeenerde beträgt 5 bis 35 Gew.% und vorzugsweise 7,5 bis 15 Gew.%.

Bei der erfindungsgemäß verwendeten Diatomeenerde handelt es sich um einen aktiven Füllstoff, der mit dem Reifengummi gut verträglich ist und bei der Vulkanisation in den Reifen eindringt.

Als pyrogene hydrophobe Kieselsäure (Komponente B) können die im Handel erhältlichen Produkte wie AEROSIL ® verwendet werden, die als aktive Füllstoffe bekannt sind und die Vulkanisation nicht stören. Diese durch Oberfächenbehandlung modifizierten pyrogenen Kieselsäuren haben eine Oberfläche nach BET von etwa 50 bis 200 m²/g und insbesondere etwa 90 bis 130 m²/g. Die mittlere Größe der Primärteilchen liegt üblicherweise im Bereich von 10 bis 20 nm. Der Anteil der pyrogenen hydrophoben Kieselsäure am erfindungsgemäßen Außentrennmittel beträgt 0,5 bis 6 Gew.% und vorzugsweise 1 bis 3 Gew.%.

Die Auswahl eines geeigneten Tensids erfordert besondere Sorgfalt, da die Vulkanisation durch Tenside sehr stark beeinträchtigt werden kann, was sich daran zeigt, daß eine selbstverständlich unakzeptable Auftrennung im Bereich der Reifennaht, der Seitenwände, der Lauffläche und des Wulstes eintritt. Schon wenige Promille bestimmter Netzmittel können zu derartigen Störungen führen. Im Rahmen der Erfindung haben sich nichtionische Tenside als geeignet erwiesen. Vorzugsweise werden Polyalkylenglykole auf der Basis von Blockpolymeren aus Ethylen- und Propylenoxid eingesetzt, die beispielsweise unter der Bezeichnung "Pluronic"® erhältlich sind. Gut geeignet sind ferner Ethoxylate wie TRITON® X-100 (Octylphenoxy-polyethoxyethanol mit durchschnittlich 10 Mol Ethylenoxid) und MARLIPAL® 013/50 (C₁₃-Oxoalkohol + 5 Mol Ethlyenoxid). Der Anteil des Tensids soll 0,1 bis 2 Gew.% und vorzugsweise 0,2 bis 0,7 Gew.% betragen.

Die erfindungsgemäß verwendeten Bindemittel verleihen dem sich bildenden Trennmittelfilm Festigkeit und führen vorzugsweise zur Ausbildung eines nicht-thermoplastischen Films, der kurzzeitig Temperaturen bis 200°C aushalten kann. Der nicht-thermoplastische Charakter des Trennmittelfilms ist von Bedeutung für die bei der Durchführung der Formung und Vulkanisation erforderliche Entlüftung, da thermoplastische Trennmittelfilme unter den scharfen Bedingungen der Formung und Vulkanisation schmieren und dadurch Luft einschließen können. Dies wiederum würde zu Fehlern in der Reifenoberfläche führen. Außerdem ist bei der Wahl des Bindemittels zu berücksichtigen wie schnell die Trocknung nach dem Aufsprühen des Außentrennmittels auf den Reifenrohling erfolgen muß. Die jeweils erforderliche Trocknungszeit richtet sich nach den Taktzeiten der jeweiligen Produktionsanlage.

Als geeignete Bindemittel haben sich insbesondere aus der Papierherstellung bekannte Leimungsmittel erwiesen. Dies sind Polymere, die Carboxylreste und vorzugsweise Arylreste enthalten, wobei mindestens so viele Carboxylreste vorhanden sein müssen, daß die Polmyere wasserlösliche Salze bilden können. Vorzugsweise handelt es sich um Copolymere aus Vinylaromaten und kurzkettigen ungesättigten Carbonsäuren, insbesondere Dicarbonsäuren. Besonders bevorzugt sind Copolymere aus Styrol und Maleinsäure bzw. Maleinsäureanhydrid, Acrylsäure und Methacrylsäure. Ob diese Polymeren als solche oder in Form ihrer Salze eingesetzt werden, richtet sich im wesentlichen nach den anzustrebenden Trockungszeiten.

Die erfindungsgemäß bevorzugten Styrol-Maleinsäure- bzw. Maleinsäureanhydrid-Copolymeren oder deren Salze sind bekannte Papierleimungsmittel (z.B. DARASIZE 942® und BAYSYNTHOL ASP®). Sie werden vorzugsweise in Form von Ammoniumsalzen und zwar insbesondere als etwa 20%ige Lösungen in Wasser verwendet. Geeignet sind ebenfalls carboxylgruppenhaltige Copolymerisate, die anstelle von Vinylaromaten andere Comonomere wie z.B. Diisobutylen enthalten. Bevorzugt sind wiederum die Ammoniumsalze, die in Form wäßriger Lösungen im Handel erhältlich sind (z.B. BAYSYNTKOL AL 2®).

Es ist auch möglich, Ester der oben beschriebenen Polymere einzusetzen. So kann man beispielsweise, wenn Entsorgungsprobleme nicht bestehen, Acrylsäureester-Styrol-Copolymere wie Copolymere aus n-Butylacrylat und Styrol einsetzen, die zum Beispiel zum Herstellen von Klebstoffen aller Art, Anstrichfarben, kunstharzgebundenen Putzen und Spachtelmassen sowie als Bindemittel für Vliesstoffe und Textilbeschichtungen bekannt sind (z.B. ACRONAL® 290 D). Derartige Ester sind normalerweise nicht wasserlöslich und müssen deshalb in Wasser dispergiert werden. Derartige wäßrige Dispersionen sind im Handel erhältlich (z.B. das zuvor genannte ACRONAL® 290 D und BASOPLAST® 400 DS).

Weiterhin können als Bindemittel in Wasser gelöstes Casein und/oder Albumin verwendet werden. Zu diesem Zweck wird beispielsweise im Handel erhältliches Säurecasein (Pulver) mit Borax oder Ammoniak aufgeschlossen, so daß man in der Regel 10 bis 20%-ige Lösungen mit einem pH-Wert von 6,5 bis 6,8 erhält. Zunächst wird Wasser vorgelegt und auf 40 bis 50°C erhitzt. Dann wird das Säurecaseinpulver eingerührt. Anschließend wird Borax bis zu einem pH-Wert von 6,5 bis 6,8 zugegeben. Eine auf diese Weise hergestellte Lösung enthält beispielsweise 77,9 Gew.% Wasser, 19,5 Gew.% Casein und 2,6 Gew.% Borax. Wenn der Aufschluß mit Ammoniak erfolgt, wird in gleicher Weise vorgegangen, wobei das Ammoniak gasförmig oder in Form einer wäßrigen Lösung (10 bis 35%-ig) zugegeben werden kann. Die Herstellung von wäßrigen Albuminlösungen erfolgt in entsprechender Weise.

Schließlich kann als Bindemittel auch noch Cellulose verwendet werden. Hierfür werden die im Handel erhältlichen wäßrigen Lösungen von kaltgelöster Cellulose eingesetzt.

Das erfindungsgemäße Außentrennmittel enthält das Bindemittel in einer Menge von 0,2 bis 3 Gew.%, vorzugsweise 0,4 bis 2 Gew.%, wobei diese Angaben im Falle der Verwendung von wäßrigen Bindemitteldispersionen nicht deren Wasseranteil und mögliche Hilfsstoffe wie Dispergiermittel umfassen.

Wenn eine schnelle Trocknung des Trennmittelfilms erforderlich ist, ist es bevorzugt, das ammoniakhaltige Bindemittel bzw. in Form von Ammoniumsalzen vorliegende Bindemittel verwendet werden, da Ammoniak sehr schnell aus dem sich ausbildenden Trennmittelfilm austritt und dadurch die Trocknung nicht behindert, sondern eher fördert. Abgesehen von den umweltbedingten Nachteilen einiger der erfindungsgemäß verwendbaren Bindemittel sind deshalb wäßrige Lösungen von Ammoniumsalzen von Styrol-Maleinsäure- bzw. Styrol-Maleinsäureanhydrid-Copolymeren besonders bevorzugt.

Die erfindungsgemäß verwendeten Farbstoffe liegen vorzugsweise in Pulverform vor. Insbesondere im Rahmen der Reifenherstellung sind normalerweise schwarze Pigmente auf Rußbasis bevorzugt. Dabei ist darauf zu achten, daß das eingesetzte Pigment gut in Wasser verteilbar ist. Geeignete Produkte sind im Handel erhältlich und nach dem Colour Index normiert. Zu nennen ist hier insbesondere das Pigment Black 7. In der Regel kommen 0,1 bis 3 Gew.% und vorzugsweise 0,3 bis 2 Gew.% Farbstoff zur Anwendung.

In besonders bevorzugten Ausführungsformen liegt der Wassergehalt des Trennmittels über 75 und häufig sogar über 85 Gew.%.

Um die Stabilität des erfindungsgemäßen Außentrennmittels zu verbessern, werden häufig 0,3 bis 2 Gew.% und vorzugsweise 0,5 bis 1 Gew.% pyrogene hydrophile Kieselsäure als Stabilisierungsmittel zugesetzt. Die Stabilisierungswirkung von hydrophiler Kieselsäure ist bekannt und dementsprechend werden derartige Kieselsäuren von verschiedenen Herstellern auf dem Markt angeboten (z.B. AEROSIL 200). Oberfläche und Teilchengröße sind ähnlich wie bei der oben beschriebenen hydrophoben Kieselsäure.

Außerdem hat es sich als günstig erwiesen, wenn das erfindungsgemäße Außentrennmittel 0,1 bis 1,5 Gew.% und vorzugsweise 0,3 bis 1 Gew.% Ammoniumstearat als zusätzliche Komponente enthält. Ammoniumstearat wirkt als Oberflächenverbesserer und aufgrund seiner Vulkanisationsfreundlichkeit verschweißungsfördernd.

Schließlich können die Eigenschaften des erfindungsgemäßen Außentrennmittels durch Verwendung von Ethanolaminen, insbesondere Triethanolamin zusätzlich verbessert werden. Mit den Ethanolaminen erfolgt eine Erhöhung bzw. Regulierung des pH-Wertes auf 7,5 bis 10 und vorzugsweise 8,0 bis 9,5. Dadurch verringert sich die Viskosität des erfindungsgemäßen Außentrennmittels auf ein gut pumpbares Niveau. Im allgemeinen wird der angestrebte Effekt mit 0,1 bis 1 Gew.% Ethanolaminen erreicht.

Die Aufbringung des erfindungsgemäßen wäßrigen Außentrennmittels auf den Rohling erfolgt mit Hilfe von luftzerstäubenden Pistolen (z.B. unter hohem Druck im Bereich von 6 bar). Als Förderpumpen können Niederdrucksysteme (1 bis 2 bar) wie z.B. Membranpumpen eingesetzt werden. Dies ist ein Vorteil gegenüber dem oben geschilderten Stand der Technik, der die Verwendung von Hochdruckpumpen erfordert.

Das erfindungsgemäße Außentrennmittel ist so wirksam, daß ein Gesamtauftrag von 10 bis 25 g (1,6 bis 4 g Feststoff) pro normalem Pkw-Reifen ausreichend ist. Dies bedeutet nicht nur eine erhebliche Materialeinsparung, sondern auch eine starke Verringerung des auf dem fertigen Reifen verbleibenden Feststoffs, was offensichtlich für das Finish bzw. die Weiterbearbeitung des Reifens vorteilhaft ist.

Bei der Verwendung der bevorzugten Ammoniumsalze von Styrol-Maleinsäure- bzw. Styrol-Maleinsäureanhydrid-Copolymeren werden in industriellen, automatisch arbeitenden Anlagen Trocknungszeiten von etwa 15 Sekunden oder noch weniger erreicht. In diesen Anlagen wird gewöhnlich getrocknete Luft unter schneller Luftzirkulation verwendet. Außerdem wird der Luftstrom durch Ausrichten auf den Reifen an die erforderliche Trocknungszeit angepaßt. Es gibt aber auch Anlagen, in denen mehr Zeit für die Trocknung zur Verfügung steht (z.B. etwa 2 Minuten). In diesen Fällen können auch die übrigen erfindungsgemäß geeigneten Bindemittel (beispielsweise Copolymerisate und andere Salze als Ammoniumsalze) verwendet werden.

Abgesehen von den oben erläuterten Sonderfällen kann die Entsorgung des Oversprays bei Verwendung des erfindungsgemäßen Außentrennmittels über normale Kläranlagen erfolgen, was einen weiteren erheblichen Vorteil des erfindungsgemäßen Außentrennmittels gegenüber dem Stand der Technik darstellt.

Ferner hat sich gezeigt, daß der Produktionsprozeß bei Verwendung des erfindungsgemäßen wäßrigen Außentrennmittels aufgrund der geringeren Substanzmenge seltener unterbrochen werden muß, als dies bei Verwendung von bekannten Außentrennmitteln der Fall ist. Letztere erfordern eine Flankenreinigung mit rotierenden Drahtbürsten in der Presse nach jeweils etwa 250 Formungen. Nach 2500 bis 3000 Formungen ist eine gründliche Reinigung erforderlich, wozu die Form ausgebaut werden muß und dann durch Strahlung mit Glasperlen gereinigt wird. Dadurch ergibt sich eine Produktionsunterbrechung von 6 bis 8 Stunden. Demgegenüber ist bei Verwendung des erfindungsgemäßen Außentrennmittels eine Flankenreinigung der Form mit rotierenden Drahtbürsten nur nach jeweils etwa 2000 bis 3000 Formungen erforderlich, und es können 16 500 und mehr Formungen durchgeführt werden, ohne daß der Produktionsprozeß zwecks Reinigung der Presse (Ausbau der Form) unterbrochen werden muß.

Schließlich ist zu erwähnen, daß das erfindungsgemäße Außentrennmittel ausschließlich vulkanisationsfreundliche Bestandteile enthält, so daß sich keine Probleme hinsichtlich einer Auftrennung im Bereich der Reifennaht, der Seitenwände, der Lauffläche und des Wulstes ergeben.

### Beispiel 1

In einer Doppelpresse wurden übliche Pkw-Reifen hergestellt. Dabei wurde in der einen Presse eine übliche Außensprühlösung mit einer Zusammensetzung gemäß den Angaben in der Beschreibungseinleitung und in der anderen Presse ein erfindungsgemäßes Außentrennmittel verwendet. Der Auftrag erfolgte, indem die Reifen per Hand mit der erfindungsgemäßen Sprühlösung bzw. mittels einer automatischen Sprühanlage mit üblicher Außensprühlösung besprüht wurden. Das erfindungsgemäße Außentrennmittel enthielt 12 Gew.% Diatomeenerde, 1,5 Gew.% pyrogene hydrophobe Kieselsäure, 0,4 Gew.% hydrophile Kieselsäure, 0,35 Gew.% Pluronic PL 9200, 0,8 Gew.% Ammoniumsalz von Styrol-Maleinsäureanhydrid-Copolymer (4 Gew.% einer 20%igen Lösung in H₂O; DARASIZE 942), 0,51 Gew.% Farbstoff auf Basis Rußpigmente (1,7 Gew.% einer 30%-igen Dispersion in Glykol), 3 Gew.% Ethylalkohol und im übrigen Wasser.

Das herkömmliche Außentrennmittel wurde in einer Menge von 60 bis 65 g je Reifen verwendet, während das erfindungsgemäße Außentrennmittel in einer Menge von 18 bis 22 g je Reifen zum Einsatz kam. Bei dem herkömmlichen Trennmittel mußte nach jeweils 250 Formungen eine Flankenreinigung mit rotierenden Drahtbürsten in der Presse erfolgen. Beim erfindungsgemäßen Trennmittel war eine derartige Reinigung nur nach jeweils 2000 bis 3000 Formungen erforderlich. Nach 2800 Formungen mußte die Form zwecks gründlicher Reinigung durch Strahlung mit Glasperlen bei Verwendung des herkömmlichen Trennmittels ausgebaut werden. Demgegenüber war eine derartige Unterbrechung des Produktionsprozesses bei Verwendung des erfindungsgemäßen Außentrennmittels selbst nach mehr als 16 500 Formungen noch nicht erforderlich.

Die mit dem erfindungsgemäßen Außentrennmittel hergestellten Reifen waren von sehr guter Qualität, d.h. das Finish der Reifen war besser als Standard. Insbesondere waren die Farbmarkierungen besser zu erkennen.

### Beispiel 2

Es wurde ein erfindungsgemäßes Außentrennmittel hergestellt, das 12 Gew.% Diatomeenerde, 2,45 Gew.% pyrogene hydrophobe Kieselsäure, 0,38 Gew.% MARLIPAL 013/50, 2 Gew.% DARASIZE 942 (siehe Beispiel 1) Zusammensetzung?), 0,58 Gew.% Farbstoff auf Basis Rußpigmente (1,94 Gew.% einer 30%-igen Dispersion in Glykol), 0,3 Gew.% Ammoniumstearat, 3,52 Gew.-% Ethylalkohol und im übrigen Wasser enthielt. Unter Verwendung dieses Außentrennmittels wurden in einer Testpresse 500 Reifen hergestellt, wobei ausgezeichnete Ergebnisse erhalten wurden.

### Beispiel 3

Es wurde ein erfindungsgemäßes Außentrennmittel hergestellt, das 6 Gew.% gefällte Kieselsäure (SIPERNAT 22 LS), 2 Gew.% pyrogene hydrophobe Kieselsäure, 0,38 Gew.% MARLIPAL 013/50, 2 Gew.% DARASIZE 942 (siehe Beispiel 1), 3,7 Gew.% Ethylalkohol, 0,58 Gew.% Farbstoff auf Basis Rußpigmente (1,94 Gew.-% einer 30%-igen Dispersion in Glykol), 0,3 Gew.% Ammoniumstearat und im übrigen Wasser enthielt. Auch mit diesem Außentrennmittel wurden in einer Testpresse 500 Reifen hergestellt, wobei wiederum sehr gute Ergebnisse erhalten wurden.

## Patentansprüche

1. Wäßriges Außentrennmittel für die Herstellung von Reifen und anderen Gummiartikeln, **dadurch gekennzeichnet,** daß es
A) 5 bis 35 Gew.% Diatomeenerde,
B) 0,5 bis 6 Gew.% pyrogene hydrophobe Kieselsäure,
C) 0,1 bis 2 Gew.% nichtionisches Tensid,
D) 0,2 bis 3 Gew.% eines Bindemittels ausgewählt aus
a) Polymeren und deren Salzen, die Carboxylreste und vorzugsweise außerdem Arylreste enthalten, wobei mindestens so viele Carboxylreste vorhanden sein müssen, daß die Polymere wasserlösliche Salze bilden können,
b) in Wasser dispergierten Estern der Polymere gemäß a),
c) in Wasser gelöstem Casein und/oder Albumin,
d) Cellulose und
e) Mischungen von zwei oder mehreren Bindemitteln gemäß a) - d),
E) 0,1 bis 3 Gew.% Farbstoff,
F) 0 bis 5 Gew.% Ethylalkohol, und
G) im übrigen Wasser enthält.

2. Außentrennmittel nach Anspruch 1, das 7,5 bis 15 Gew.-% Diatomeenerde und/oder 1 bis 3 Gew.-% pyrogene hydrophobe Kieselsäure und/oder 0,2 bis 0,7 Gew.-% nichtionisches Tensid und/oder 0,4 bis 2 Gew.-% Bindemittel und/oder 0,3 bis 1 Gew.-% Farbstoff und/oder 3 bis 5 Gew.-% Ethylalkohol und/oder 45 bis 90 Gew.-% Wasser enthält.

3. Außentrennmittel nach Anspruch 1 oder 2, bei dem das Tensid ein Polyalkylenglykol auf Basis von Blockpolymeren aus Ethylen- und Propylenoxid oder ein Ethoxylat von Octylphenol mit durchschnittlich 10 Mol Ethylenoxid oder ein Ethoxylat von C₁₃-Oxoalkohol mit durchschnittlich 5 Mol Ethylenoxid ist.

4. Außentrennmittel nach einem der Ansprüche 1 bis 3, bei dem das Bindemittel ein Copolymer aus Vinylaromaten und kurzkettigen ungesättigten Carbonsäuren, insbesondere Dicarbonsäuren, oder ein Salz davon ist.

5. Außentrennmittel nach Anspruch 4, bei dem das Bindemittel ein Styrol-Maleinsäure oder ein Styrol-Maleinsäureanhydrid-Copolymer oder ein Salz davon ist.

6. Außentrennmittel nach Anspruch 5, bei dem das Salz des Copolymeren ein Ammoniumsalz ist.

7. Außentrennmittel nach einem der Ansprüche 1 bis 6, bei dem der Farbstoff ein Pigment auf Rußbasis ist.

8. Außentrennmittel nach einem der Ansprüche 1 bis 7, das 0,3 bis 2 Gew.% und vorzugsweise 0,5 bis 1 Gew.% pyrogene hydrophile Kieselsäure als Stabilisierungsmittel enthält.

9. Außentrennmittel nach einem der Ansprüche 1 bis 8, das zusätzlich 0,1 bis 1,5 Gew.-% und vorzugsweise 0,3 bis 1 Gew.-% Ammoniumstearat enthält.

10. Außentrennmittel nach einem der Ansprüche 1 bis 9, das zusätzlich ein oder mehrere Ethanolamine, insbesondere Triethanolamin, in einer solchen Menge enthält, daß der pH-Wert 7,5 bis 10 und vorzugsweise 8,0 bis 9,5 beträgt.

11. Außentrennmittel nach Anspruch 10, das 0,1 bis 1 Gew.-% Ethanolamine, insbesondere Triethanolamin enthält.

12. Verfahren zur Formung und Vulkanisation von Reifen und anderen Gummiartikeln, bei dem in einer Presse mit Hilfe einer Heizmembran unter hohem Druck Negativformen in den Rohling gedrückt werden und die Vulkanisation bewerkstelligt wird, **dadurch gekennzeichnet,** daß der Rohling vor der Durchführung der Formung und Vulkanisation auf der Außenseite mit einem Außentrennmittel gemäß einem der Ansprüche 1 bis 11 besprüht wird und das darin enthaltene Wasser unter Ausbildung eines Trennmittelfilms verdunsten gelassen wird.

13. Verfahren nach Anspruch 12, bei dem das Außentrennmittel mit Hilfe von luftzerstäubenden Pistolen aufgesprüht wird.

14. Verfahren nach Anspruch 12 oder 13, bei dem pro normalem Pkw-Reifen 10 bis 25 g des Außentrennmittels verwendet werden.

## Claims

1. An aqueous external release agent for the manufacture of tyres and other rubber articles, characterised in that it contains
A) 5 to 35 weight % of diatomaceous earth,
B) 0.5 to 6 weight % of pyrogenic, hydrophobic hydrated silica,
C) 0.1 to 2 weight % of nonionic surfactant,
D) 0.2 to 3 weight % of a binder selected from
a) polymers and their salts which contain carboxyl radicals and preferably contain aryl radicals in addition, wherein the number of carboxyl radicals present must be at least such that the polymers can form water-soluble salts,
b) esters, dispersed in water, of the polymers according to a),
c) casein and/or albumin dissolved in water,
d) cellulose, and
e) mixtures of two or more binders according to a) - d),
E) 0.1 to 3 weight % of colorant,
F) 0 to 5 weight % of ethyl alcohol, and
G) balance water.

2. An external release agent according to claim 1, which contains 7.5 to 15 weight % of diatomaceous earth and/or 1 to 3 weight % of pyrogenic hydrophobic hydrated silica and/or 0.2 to 0.7 weight % of nonionic surfactant and/or 0.4 to 2 weight % of binder and/or 0.3 to 1 weight % of colorant and/or 3 to 5 weight % of ethyl alcohol and/or 45 to 90 weight % of water.

3. An external release agent according to according to claim 1 or 2, wherein the surfactant is a polyalkylene glycol based on block polymers of ethylene and propylene oxides, or an ethoxylate of octylphenol with an average of 10 moles of ethylene oxide, or an ethoxylate of C₁₃-oxoalcohol with an average of 5 moles of ethylene oxide.

4. An external release agent according to any one of claims 1 to 3, wherein the binder is a copolymer of aromatic vinyl compounds and short chain unsaturated carboxylic acids, particularly dicarboxylic acids, or a salt thereof.

5. An external release agent according to claim 4, wherein the binder is a styrenemaleic acid or a styrene-maleic anhydride copolymer or a salt thereof.

6. An external release agent according to claim 5, wherein the salt of the copolymer is an ammonium salt.

7. An external release agent according to any one of claims 1 to 6, wherein the colorant is a pigment based on carbon black.

8. An external release agent according to any one of claims 1 to 7, which contains 0.3 to 2 weight %, preferably 0.5 to 1 weight %, of pyrogenic hydrophilic hydrated silica as a stabilising agent.

9. An external release agent according to any one of claims 1 to 8, which additionally contains 0.1 to 1.5 weight %, preferably 0.3 to 1 weight %, of ammonium stearate.

10. An external release agent according to any one of claims 1 to 9, which additionally contains one or more ethanolamines, particularly triethanolamine, in an amount such that the pH is 7.5 to 10, preferably 8.0 to 9.5.

11. An external release agent according to claim 10, which contains 0.1 to 1 weight % of ethanolamines, particularly triethanolamine.

12. A process for the moulding and vulcanisation of tyres and other rubber articles, wherein negative moulds are pressed into the blank and vulcanisation is effected under high pressure with the aid of a hot membrane in a press, characterised in that before effecting moulding and vulcanisation the outside of the blank is sprayed with an external release agent according to any one of claims 1 to 11, and the water contained therein is allowed to evaporate with the formation of a film of external release agent.

13. A process according to claim 12, wherein the external release agent is sprayed on with the aid of air atomisation guns.

14. A process according to claim 12 or 13, wherein 10 to 25 g of the external release agent are used per normal private car tyre.

## Revendications

1. Agent de démoulage externe aqueux pour la fabrication de pneumatiques et autres articles en caoutchouc, caractérisé en ce qu'il contient
A) 5 à 35% en poids de terre de diatomées,
B) 0,5 à 6 % en poids d'une silice pyrogène hydrophobe,
C) 0,1 à 2 % en poids d'un agent tensioactif non ionique,
D) 0,2 à 3 % en poids d'un liant choisi parmi
a) des polymères et leurs sels contenant des groupes carboxyle et de préférence en outre des radicaux aryle, avec une quantité de groupes carboxyle au moins suffisante pour que les polymères puissent former des sels solubles dans l'eau,
b) des esters des polymères définis ci-dessus sous a), dispersés dans l'eau,
c) de la caséine et/ou de l'albumine en solution dans l'eau,
d) de la cellulose et
e) des mélanges de deux ou plusieurs liants tels que définis ci-dessus sous a) à d),
E) 0,1 à 3% en poids de colorant,
F) 0 à 5 % en poids d'alcool éthylique, et
G) de l'eau pour le complément à 100 %.

2. Agent de démoulage externe selon la revendication 1, contenant 7,5 à 15 % en poids de terre de diatomées et/ou 1 à 3 % en poids de silice pyrogène hydrophobe et/ou 0,2 à 0,7 % en poids d'un agent tensioactif non ionique et/ou 0,4 à 2 % en poids de liant et/ou 0,3 à 1 % en poids de colorant et/ou 3 à 5 % en poids d'alcool éthylique et/ou 45 à 90 % en poids d'eau.

3. Agent de démoulage externe selon la revendication 1 ou 2, dans lequel l'agent tensioactif est un polyalkylèneglycol à base de polymères séquencés de l'oxyde d'éthylène et de l'oxyde de propylène ou un éthoxylate de l'octylphénol à 10 ml d'éthylène en moyenne ou un éthoxylate d'un alcool Oxo en C₁₃ à 5 mol d'oxyde d'éthylène en moyenne.

4. Agent de démoulage externe selon l'une des revendications 1 à 3, dans lequel le liant est un copolymère de composés vinylaromatiques et d'acides carboxyliques insaturés à chaîne courte, plus spécialement des acides dicarboxyliques, ou un sel d'un tel copolymère.

5. Agent de démoulage externe selon la revendication 4, dans lequel le liant est un copolymère styrène-acide maléique ou styrène-anhydride maléique ou un sel d'un tel copolymère.

6. Agent de démoulage externe selon la revendication 5, dans lequel le sel du copolymère est un sel d'ammonium.

7. Agent de démoulage externe selon l'une des revendications 1 à 6, dans lequel le colorant est un pigment à base de noir de carbone.

8. Agent de démoulage externe selon l'une des revendications 1 à 7, contenant 0,3 à 2 % en poids, de préférence 0,5 à 1 % en poids d'une silice pyrogène hydrophile en tant que stabilisant.

9. Agent de démoulage externe selon l'une des revendications 1 à 8, contenant en outre 0,1 à 1,5 % en poids, de préférence 0,3 à 1 % en poids de stéarate d'ammonium.

10. Agent de démoulage externe selon l'une des revendications 1 à 9, contenant en outre une ou plusieurs éthanolamines, en particulier la triéthanolamine, en quantité suffisante pour régler le pH à un niveau de 7,5 à 70, de préférence de 8,0 à 9,5.

11. Agent de démoulage externe selon la revendication 10, contenant 0,1 à 1 % en poids d'éthanolamines, plus spécialement de triéthanolamine.

12. Procédé pour mouler et vulcaniser des pneumatiques et d'autres articles en caoutchouc dans lequel, dans une presse, on imprime à l'aide d'une membrane chauffante sous haute pression un moule négatif dans le pneumatique brut et on provoque la vulcanisation, caractérisé en ce que, avant moulage et vulcanisation, on applique sur la face extérieure du pneumatique, par pulvérisation, un agent de démoulage externe selon une des revendications 1 à 11, puis on laisse évaporer l'eau contenue dans cet agent de démoulage externe, ce qui provoque la formation d'une pellicule d'agent de démoulage.

13. Procédé selon la revendication 12, dans lequel l'agent de démoulage externe est appliqué par pulvérisation à l'aide de pistolets atomiseurs alimentés en air.

14. Procédé selon la revendication 12 ou 13, dans lequel on utilise de 10 à 25 g de l'agent de démoulage externe par pneumatique normal de véhicule tourisme.
